# EUROPÄISCHE PATENTSCHRIFT

(11) **EP 2 473 372 B1**
(45) Veröffentlichungstag und Bekanntmachung des Hinweises auf die Patenterteilung: **04.12.2013**
(21) Anmeldenummer: 10740556.5
(22) Anmeldetag: 02.08.2010
(51) Int. Cl.: B60N 2/02

(54) **FAHRZEUGSITZ, INSBESONDERE NUTZFAHRZEUGSITZ**
VEHICLE SEAT, ESPECIALLY UTILITY VEHICLE SEAT
SIÈGE DE VÉHICULE, NOTAMMENT SIÈGE DE VÉHICULE UTILITAIRE

(30) Priorität: 01.09.2009 DE 102009040461
(43) Veröffentlichungstag der Anmeldung: 11.07.2012
(73) Patentinhaber: KEIPER GmbH & Co. KG, 67657 Kaiserslautern (DE)
(72) Erfinder: TEUFEL, Ingo, 67806 Rockenhausen (DE); SCHUMANN, Kai, 66509 Rieschweiler (DE)
(74) Vertreter: Kalkoff & Partner
(86) Internationale Anmeldenummer: PCT/EP2010/004718
(87) Internationale Veröffentlichungsnummer: WO 2011/026546

(56) Entgegenhaltungen:
- DE-A1-102008 046 000
- DE-A1-102008 049 923
- DE-U1-202006 001 969

## Beschreibung

Die Erfindung betrifft einen Fahrzeugsitz, insbesondere Nutzfahrzeugsitz, mit den Merkmalen des Oberbegriffs des Anspruches 1.

Bei einem durch Benutzung bekannten Fahrzeugsitz ist die Sitztiefe manuell einstellbar. Auf der Unterseite der Sitzschale ist eine in Sitzlängsrichtung verlaufende, biegbare Verriegelungsstange befestigt, welche an ihrem freien vorderen Ende einen Handgriff aufweist. Die - beispielsweise aus Federblech bestehende - Verriegelungsstange wirkt mit einem Stift als Gegenverzahnung zusammen, welcher am vorderen Ende des Sitzrahmens befestigt ist und nach oben absteht. Wird der Handgriff nach oben gezogen, verlässt die Verriegelungsstange den Stift und legt sich an die Sitzschale an, so dass dass Sitzkissen als Ganzes in Sitzlängsrichtung verschoben werden kann.

Die DE 20 2006 001 969 U1 offenbart einen Fahrzeugsitz der eingangs genannten Art. Dessen Sitzschale besteht aus einer unverschieblichen Sitzwanne und einem Sitztiefenverstellteil, welches mittels eines auf der unteren Seite der Sitzwanne angebrachten Motors, eines Ritzels und einer Zahnstange relativ zur Sitzwanne verschieblich ist, um die Sitztiefe einzustellen. Ein weiterer Fahrzeugsitz dieser Art ist in der DE 10 2008 046 000 A1 beschrieben. Auch dessen Sitzschale besteht aus einem Sitzrahmen gelagerten Teil und einem relativ dazu verschieblichen Teil, welcher mittels eines auf der unteren Seite der Sitzschale angebrachten Motors, eines vom Motor gedrehten Ritzels und einer am verschieblichen Teil der Sitzschale angebrachten Zahnstange bewegt wird. Auch die DE 10 2008 049 923 A1 offenbart eine derartige Sitztiefeneinstellung.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Die motorische Einstellung der Sitztiefe erhöht den Komfort für den Insassen. Die Lagerung des Motors an der Sitzschale hat den Vorteil, dass ein die Sitzschale aufweisendes Sitzkissen als vormontierte Baugruppe hergestellt werden kann. Dabei hat die Lagerung auf der Oberseite der Sitzschale den Vorteil, dass gegenüber der manuellen Sitztiefeneinstellung kein zusätzlicher Bauraum im Bereich des Sitzrahmens benötigt wird. Die Verschiebung der Sitzschale und damit des Sitzkissens als Ganzes hat den Vorteil, dass die Stärke des Polsters des Sitzkissens erhalten bleibt.

Eine Anordnung des Motors im vorderen Bereich der Sitzschale bietet den Vorteil, dass eine Erhöhung der Polsterdicke zur Beibehaltung des Sitzkomforts möglich ist, und dass das Sitzkissen bei geringen Sitztiefen unter die Lehne geschoben werden kann. Um den Motor vor dem Gewicht des Insassens und das Polster vor dem Motor zu schützen, ist vorzugsweise wenigstens eine Abdeckung für den Motor vorgesehen. Diese Abdeckung kann als Antisubmarining-Rampe ausgebildet sein, indem sie in Sitzlängsrichtung von hinten nach vorne wenigstens abschnittsweise ansteigend ausgebildet ist.

Die Umsetzung der Drehbewegung des Motors in eine definierte Verschiebung des Sitzkissens erfolgt vorzugsweise mittels eines Ritzels und einer damit kämmenden Zahnstange. Die Verzahnung der Zahnstange ist vorzugsweise am Rand einer ersten Öffnung auf einer der beiden in Sitzlängsrichtung verlaufenden Seiten ausgebildet, wodurch das sich drehende Ritzel seitlich abgedeckt ist. Um von der Genauigkeit der Führungen zwischen Sitzschale und Sitzrahmen unabhängig zu sein, ist zwischen Sitzschale und Zahnstange vorzugsweise eine weitere Führung vorgesehen, beispielsweise eine zweite Öffnung in der Zahnstange und ein von dieser aufgenommener und relativ zu dieser beweglicher Führungsbolzen. Die Anordnung kann auch getauscht sein. Vorzugsweise sind das Ritzel und das Zahnsegment auf der in Hauptschwingrichtung unteren Seite der Sitzschale angeordnet, um eine Behinderung durch das Polster und einen langen Schlitz in der Sitzschale für den Durchgriff zum Sitzrahmen zu vermeiden. Entsprechend ragt die Abtriebswelle des Motors durch die Sitzschale.

Eine in Sitzquerrichtung mittige Anordnung von Ritzel und Zahnstange hat den Vorteil, dass ein Verkanten der Führungen zwischen Sitzschale und Sitzrahmen vermieden wird. Zudem kann der Bauraum ausgenutzt werden, der bei der bekannten manuellen Sitztiefeneinstellung für den Handgriff und die Verriegelungsstange freigehalten ist. Hierfür ist auch eine Befestigung des Zahnsegments am Sitzrahmen am vorderen Ende des Zahnsegments geeignet. In der Art eines Baukastens kann der Sitzrahmen wahlweise mit einer Sitzschale mit manueller oder mit elektrischer Sitztiefeneinstellung kombiniert werden, so dass in der Produktion keine Variantenbildung für den Sitzrahmen notwendig ist. Die Sitzschale ist in beiden Varianten die gleiche, und auch das Sitzkissen kann später noch einfach ausgewechselt werden.

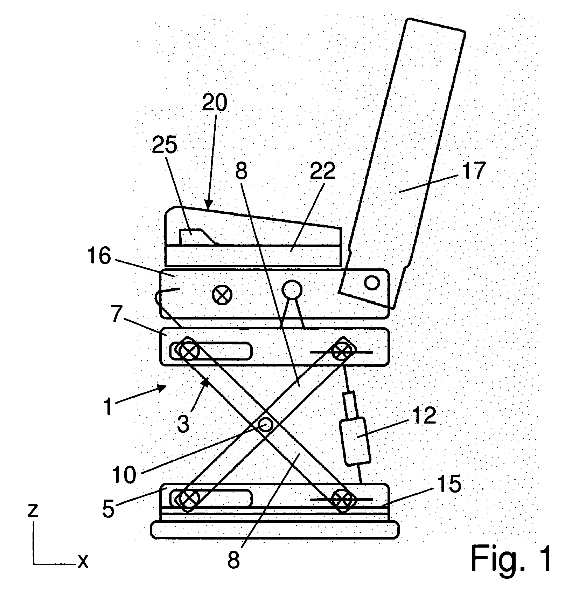

Im folgenden ist die Erfindung anhand eines in der Zeichnung dargestellten Ausführungsbeispiels näher erläutert. Es zeigen
- Fig. 1: eine schematische Seitenansicht des Ausführungsbeispiels,

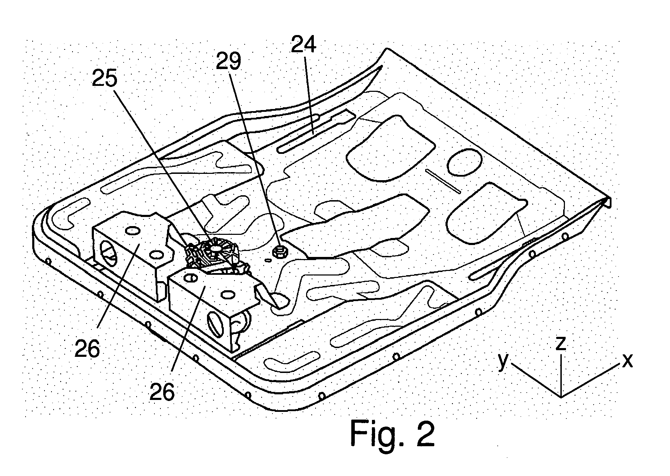

- Fig. 2: eine perspektivische Ansicht der Sitzschale von schräg oben, und

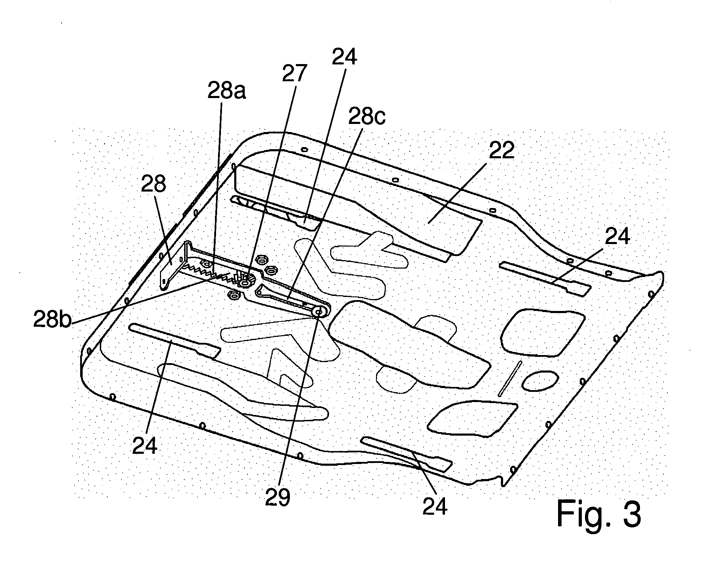

- Fig. 3: eine perspektivische Ansicht der Sitzschale von schräg unten.

Ein Fahrzeugsitz 1 für ein Nutzfahrzeug oder ein anderes Kraftfahrzeug weist ein Scherengestell 3 auf, welches einen Unterrahmen 5, einen oberhalb desselben angeordneten Oberrahmen 7 und beidseitig je ein Paar gekreuzter Schwingen 8 umfasst. Eine Scherenachse 10 verbindet die beiden Kreuzungspunkte und definiert zugleich die in Sitzquerrichtung y verlaufende Achse, um welche die Schwingen 8 relativ zueinander schwenken können. Die Schwingen 8 sind jeweils an ihrem hinteren Ende am Unterrahmen 5 bzw. am Oberrahmen 7 - auf eine später genauer beschriebene Weise - drehbar gelagert und weisen jeweils an ihrem vorderen Ende drehbare Rollen auf, mittels denen sie im oder am Oberrahmen 7 bzw. Unterrahmen 5 in Sitzlängsrichtung x beweglich geführt sind. Durch diese Bewegung der Schwingen 8 ändert sich die Höhe des Oberrahmens 7 über dem Unterrahmen 5, im folgenden kurz als Höhe des Scherengestells 3 bezeichnet. Mittels einer Feder 12 und vorzugsweise eines Dämpfers wird das Scherengestell 3 ein schwingfähiges System, welches den Sitzkomfort erhöht. Die Hauptschwingrichtung des Scherengestells 3, welche im Idealfall der Vertikalen entspricht, sei mit z bezeichnet.

Das Scherengestell 3 ist vorliegend mittels Sitzschienen 15 in Sitzlängsrichtung x verschiebbar, womit der Fahrzeugsitz 1 längseinstellbar ist, d.h. seine Sitzlängsposition einstellbar ist. Der Fahrzeugsitz 1 weist ferner einen Sitzrahmen 16 auf, welcher einerseits in seinem hinteren Bereich am Oberrahmen 7 beidseitig angelenkt ist und andererseits in seinem vorderen Bereich mittels eines Neigungseinstellers anhebbar und absenkbar und damit in seiner Neigung relativ zum Scherengestell 3 einstellbar ist. Der Fahrzeugsitz 1 weist noch eine Lehne 17 auf, welche am Sitzrahmen 16 (oder alternativ am Oberrahmen 7) - vorliegend neigungseinstellbar - angebracht ist.

Auf dem Sitzrahmen 16 ist ein Sitzkissen 20 angeordnet, welches als Baugruppe eine Sitzschale 22, beispielsweise aus Blech oder Kunststoff, ein auf der Sitzschale 22 aufliegendes Polster, beispielsweise aus Schaumstoff, und einen das Polster umschließenden und an der Sitzschale 22 befestigten Bezug, beispielsweise aus Leder oder Textilien, aufweist. Die Sitztiefe des Sitzkissens 20 ist einstellbar, wofür die Sitzschale 22 in Sitzlängsrichtung x relativ zum Sitzrahmen 16 beweglich gelagert ist, vorliegend mittels vier seitlicher Führungen 24 (zwei links, zwei rechts), beispielsweise Gleitlager aus Kunststoff oder Kugellager wie bei Schubladen in Möbelstücken. Die Führungen 24, von denen in der Zeichnung nur die zugehörigen Aufnahmen in der Sitzschale 22 dargestellt sind, definieren eine Vier-Punkt-Auflage (zwischen Sitzschale 22 und Sitzrahmen 16).

Auf der in Hauptschwingrichtung z oberen Seite der Sitzschale 22 weist das Sitzkissen 20 außerdem - als Antrieb für die Sitztiefeneinstellung - einen Getriebemotor auf, d.h. eine Baugruppe aus Elektromotor und abtriebsseitiger Getriebestufe, im folgenden kurz als Motor 25 bezeichnet, und zwar vorliegend in Sitzquerrichtung y ungefähr mittig und in Sitzlängsrichtung x im vorderen Bereich. Das Gehäuse des Motors 25 ist an der Sitzschale 22 befestigt, vorliegend mittels Schrauben und an der Sitzschale 22 angeschweißten Schweißmuttern angeschraubt. Wenigstens eine, vorliegend zwei Abdeckungen 26, die vorzugsweise als einfache Kantteile ausgebildet und - beispielsweise mittels Punktschweißung - an der Sitzschale 22 befestigt sind, decken den Motor 25 wenigstens teilweise ab, um sowohl den Motor 25 vor dem Gewicht des Insassens als auch das Polster vor Beschädigungen durch den Motor 25 zu schützen. Das Polster weist vorzugsweise eine Aussparung für die Abdeckungen 26 und den Motor 25 auf, um eine Polsterpressung und damit eine reduzierte Wirkung zu vermeiden. Die Abdeckungen 26 weisen einen schrägen Verlauf auf, indem sie - in Sitzlängsrichtung x von hinten nach vorne - in Hauptschwingrichtung z wenigstens abschnittsweise ansteigend ausgebildet sind, um dem Submaring-Effekt, d.h. dem Abtauchen des Unterkörpers des Insassens unter dem Beckengurt hindurch, entgegen zu wirken.

Die Abtriebswelle des Motors 25 ragt durch eine in Sitzquerrichtung y mittige Öffnung der Sitzschale 22 auf die in Hauptschwingrichtung z untere Seite der Sitzschale 22. Auf der Abtriebswelle sitzt drehfest ein Ritzel 27, welches mit einem Zahnsegment 28 kämmt, genauer gesagt mit einer Verzahnung 28a desselben. Das Zahnsegment 28 ist von länglicher Gestalt und ist an seinem vorderen Ende am Sitzrahmen 16 befestigt, vorliegend angeschraubt, wofür der Sitzrahmen zwei Öffnungen aufweist. Das Zahnsegment 28 weist in Sitzlängsrichtung x hintereinander zwei längliche Öffnungen auf. In der vorderen ersten Öffnung 28b ist das Ritzel 27 angeordnet. Am Rand dieser ersten Öffnung 28b ist auf einer der beiden in Sitzlängsrichtung x verlaufenden Seiten die Verzahnung 28a ausgebildet. Durch die hintere zweite Öffnung 28c ist ein Führungsbolzen 29 gesteckt, welcher in Sitzquerrichtung y mittig an der Sitzschale 22 befestigt ist, vorliegend angeschraubt, und in Hauptschwingrichtung z nach unten absteht. Der Führungsbolzen 29 kann an seinem unteren, freien Ende einen Kopf aufweisen, so dass das Zahnsegment 28 in Hauptschwingrichtung z gesichert ist. Der Führungsbolzen 29 kann zur Geräuschdämpfung aus Kunststoff bestehen.

Um die Sitztiefe des Sitzkissens 22 einzustellen, wird der Motor 25 bestromt, wodurch sich das Ritzel 27 dreht und an der Verzahnung 28a entlang läuft. Dadurch verschiebt sich das Sitzkissen 22 mit der Sitzschale 22 in Sitzlängsrichtung x. Bei geringen Sitztiefen schiebt sich das Sitzkissen 22 in einen unterhalb des unteren Endes der Lehne 17 vorhandenen Bauraum. Die Anbringung der Lehne 17 am Sitzrahmen 16 (oder am Oberrahmen 7) ist entsprechend dafür ausgelegt. In alternativer Ausführung sind der Sitzrahmen 16 und der Oberrahmen 7 das gleiche Bauteil.

### Bezugszeichenliste

- 1: Fahrzeugsitz
- 3: Scherengestell
- 5: Unterrahmen
- 7: Oberrahmen
- 8: Schwinge
- 10: Scherenachse
- 12: Feder
- 15: Sitzschiene
- 16: Sitzrahmen
- 17: Lehne
- 20: Sitzkissen
- 22: Sitzschale
- 24: Führung
- 25: Motor
- 26: Abdeckung
- 27: Ritzel
- 28: Zahnsegment
- 28a: Verzahnung
- 28b: erste Öffnung
- 28c: zweite Öffnung
- 29: Führungsbolzen
- x: Sitzlängsrichtung
- y: Sitzquerrichtung
- z: Hauptschwingrichtung

## Patentansprüche

1. Fahrzeugsitz, insbesondere Nutzfahrzeugsitz, mit einem Sitzrahmen (16), einer Sitzschale (22), welche - zur Einstellung der Sitztiefe - relativ zum Sitzrahmen (16) in Sitzlängsrichtung (x) verschieblich gelagert ist, und einem Motor (25), welcher an der Sitzschale (22) gelagert ist und-mittels dessen die Sitztiefe einstellbar ist, **dadurch gekennzeichnet, dass** der Motor (25) auf der in Hauptschwingrichtung (z) oberen Seite der Sitzschale (22) gelagert ist.

2. Fahrzeugsitz nach Anspruch 1, **dadurch gekennzeichnet, dass** der Motor (25) wenigstens teilweise mit wenigstens einer Abdeckung (26) abgedeckt ist, welche an der Sitzschale (22) befestigt ist.

3. Fahrzeugsitz nach Anspruch 2, **dadurch gekennzeichnet, dass** die Abdeckung (26) - in Sitzlängsrichtung (x) von hinten nach vorne - in Hauptschwingrichtung (z) wenigstens abschnittsweise ansteigend ausgebildet ist.

4. Fahrzeugsitz nach einem der vorhergehenden Ansprüche, **dadurch gekennzeichnet, dass** der Motor (25) mittels eines Ritzels (27) mit einem am Sitzrahmen (16) befestigten Zahnsegment (28) zusammenwirkt, dessen Verzahnung (28a) mit dem Ritzel (27) kämmt.

5. Fahrzeugsitz nach Anspruch 4, **dadurch gekennzeichnet, dass** das Zahnsegment (28) eine sich in Sitzlängsrichtung (x) erstreckende erste Öffnung (28b) aufweist, an deren Rand auf einer Seite die Verzahnung (28a) ausgebildet ist.

6. Fahrzeugsitz nach Anspruch 4 oder 5, **dadurch gekennzeichnet, dass** das Zahnsegment (28) eine sich in Sitzlängsrichtung (x) erstreckende zweite Öffnung (28c) aufweist, welche einen an der Sitzschale (22) vorgesehenen Führungsbolzen (29) aufnimmt.

7. Fahrzeugsitz nach einem der Ansprüche 4 bis 6, **dadurch gekennzeichnet, dass** das Ritzel (27) und das Zahnsegment (28) auf der in Hauptschwingrichtung (z) unteren Seite der Sitzschale (22) angeordnet sind.

8. Fahrzeugsitz nach einem der Ansprüche 4 bis 7, **dadurch gekennzeichnet, dass** das Zahnsegment (28) an seinem in Sitzlängsrichtung (x) vorderen Ende am Sitzrahmen (16) befestigt ist.

9. Fahrzeugsitz nach einem der Ansprüche 4 bis 8, **dadurch gekennzeichnet, dass** das Ritzel (27) und/oder das Zahnsegment (28) bezüglich der Sitzschale (22) in Sitzquerrichtung (y) mittig angeordnet sind.

10. Fahrzeugsitz nach einem der vorhergehenden Ansprüche, **dadurch gekennzeichnet, dass** ein in einer Hauptschwingrichtung (z) schwingfähiges Scherengestell (3) den Sitzrahmen (16) trägt.

11. Fahrzeugsitz nach einem der vorhergehenden Ansprüche, **dadurch gekennzeichnet, dass** ein Sitzkissen (20) als vormontierte Baugruppe die Sitzschale (22), ein auf der Sitzschale (22) aufliegendes Polster und einen das Polster umschließenden und an der Sitzschale (22) befestigten Bezug aufweist.

12. Fahrzeugsitz nach Anspruch 11, **dadurch gekennzeichnet, dass** der Motor (25), gegebenenfalls mit einer Abdeckung (26) innerhalb einer Aussparung des Polsters angeordnet ist.

## Claims

1. A vehicle seat, especially a utility vehicle seat, with a seat frame (16), a seat shell (22) that, in order to adjust the seat depth, is mounted to move relative to the seat frame (16) in the longitudinal direction of the seat (x), and a motor (25) that is mounted on the seat shell (22) and can be used to adjust the seat depth, **characterized in that** the motor (25) is mounted on the top side of the seat shell (22) relative to the main direction of vibration (z).

2. The vehicle seat according to claim 1, **characterized in that** the motor (25) is at least partially covered with a least one cover (26) that is fastened to the seat shell (22).

3. The vehicle seat according to claim 2, **characterized in that** the cover (26) is designed sloping upward, at least sectionally, from back to front in the longitudinal direction of the seat (x) relative to the main direction of vibration (z).

4. The vehicle seat according to any one of the preceding claims, **characterized in that** the motor (25) interacts by means of a pinion (27) with a toothed segment (28) that is fastened to the seat frame (16) and the teeth (28a) of which mesh with the pinion (27).

5. The vehicle seat according to claim 4, **characterized in that** the toothed segment (28) has, extending in the longitudinal direction of the seat (x), a first opening (28b) with the teeth (28a) being formed on a side of the edge thereof.

6. The vehicle seat according to claim 4 or 5, **characterized in that** the toothed segment (28) has, extending in the longitudinal direction of the seat (x), a second opening (28c) that accommodates a guide pin (29) provided on the seat shell (22).

7. The vehicle seat according to one of claims 4 to 6, **characterized in that** the pinion (27) and the toothed segment (28) are arranged on the bottom side of the seat shell (22) relative to the main direction of vibration (z).

8. The vehicle seat according to one of claims 4 to 7, **characterized in that** the toothed segment (28) is fastened to the seat frame (16) at its front-end in the longitudinal direction of the seat (x).

9. The vehicle seat according to one of claims 4 to 8, **characterized in that** the pinion (27) and/or the toothed segment (28) are arranged in the middle in the transverse direction of the seat (y) with reference to the seat shell (22).

10. The vehicle seat according to any one of the preceding claims, **characterized in that** a scissor frame (3) bears the seat frame (16) and is capable of vibrating in a main direction of vibration (z).

11. The vehicle seat according to any one of the preceding claims, **characterized in that** a seat cushion (20), as a pre-mounted assembly, comprises the seat shell (22), a cushion lying on the seat shell (22), and a cover that encloses the cushion and is attached to the seat shell (22).

12. The vehicle seat according to claim 11, **characterized in that** the motor (25), possibly with a cover (26), is arranged within a recess in the cushion.

## Revendications

1. Siège de véhicule, en particulier siège de véhicule utilitaire, avec un châssis de siège (16), une coque de siège (22) montée de façon déplaçable dans le sens longitudinal du siège (x) par rapport au châssis de siège (16) - pour le réglage de la profondeur d'assise, et un moteur (25) monté sur la coque de siège (22) et permettant de régler la profondeur d'assise, **caractérisé en ce que** le moteur (25) est monté sur le côté supérieur de la coque de siège (22) dans la direction d'oscillation principale (z).

2. Siège de véhicule selon la revendication 1, **caractérisé en ce que** le moteur (25) est au moins partiellement recouvert d'au moins un cache (26) fixé à la coque de siège (22).

3. Siège de véhicule selon la revendication 2, **caractérisé en ce que** le cache (26) est conçu ascendant au moins par sections dans la direction d'oscillation principale (z) - de l'arrière vers l'avant dans le sens longitudinal du siège (x).

4. Siège de véhicule selon l'une des revendications précédentes, **caractérisé en ce que** le moteur (25) coopère au moyen d'un pignon (27) avec un segment denté (28) fixé au châssis de siège (16), dont la denture (28a) engrène avec le pignon (27).

5. Siège de véhicule selon la revendication 4, **caractérisé en ce que** le segment denté (28) comporte une première ouverture (28b) qui s'étend dans le sens longitudinal du siège (x), sur un côté du bord de laquelle est formée la denture (28a).

6. Siège de véhicule selon la revendication 4 ou 5, **caractérisé en ce que** le segment denté (28) comporte une deuxième ouverture (28c) qui s'étend dans le sens longitudinal du siège (x), laquelle accueille une broche de guidage (29) prévue sur la coque de siège (22).

7. Siège de véhicule selon l'une des revendications 4 à 6, **caractérisé en ce que** le pignon (27) et le segment denté (28) sont agencés du côté inférieur de la coque de siège (22) dans la direction d'oscillation principale (z).

8. Siège de véhicule selon l'une des revendications 4 à 7, **caractérisé en ce que** le segment denté (28) est fixé au châssis de siège (16) par son extrémité avant dans le sens longitudinal du siège (x).

9. Siège de véhicule selon l'une des revendications 4 à 8, **caractérisé en ce que** le pignon (27) et/ou le segment denté (28) sont agencés au centre dans le sens transversal du siège (y) par rapport à la coque de siège (22).

10. Siège de véhicule selon l'une des revendications précédentes, **caractérisé en ce qu'**une structure en ciseaux (3) apte à osciller dans une direction d'oscillation principale (z) porte le châssis de siège (16).

11. Siège de véhicule selon l'une des revendications précédentes, **caractérisé en ce qu'**un coussin de siège (20) comporte la coque de siège (22), un coussin posé sur la coque de siège (22) et un revêtement fixé sur la coque de siège (22) et enveloppant le coussin, en tant que bloc de construction préassemblé.

12. Siège de véhicule selon la revendication 11, **caractérisé en ce que** le moteur (25) peut éventuellement être agencé avec un cache (26) à l'intérieur d'un évidement du coussin.
